# EUROPÄISCHE PATENTSCHRIFT

(11) **EP 0 960 037 B1**
(45) Veröffentlichungstag und Bekanntmachung des Hinweises auf die Patenterteilung: **29.05.2002**
(21) Anmeldenummer: 98912216.3
(22) Anmeldetag: 13.02.1998
(51) Int. Cl.: B60Q 1/26, F21K 7/00

(54) **LEUCHTELEMENT, INSBESONDERE ZUR BELEUCHTUNG VON FUNKTIONSSYMBOLEN ODER ZUR SIGNALISIERUNG VON FUNKTIONEN IN KRAFTFAHRZEUGEN**
LUMINOUS ELEMENT, ESPECIALLY FOR ILLUMINATING FUNCTION SYMBOLS OR INDICATING FUNCTIONS IN AUTOMOBILES
ELEMENT LUMINEUX, NOTAMMENT POUR L'ECLAIRAGE DE SYMBOLES DE FONCTION OU POUR LA SIGNALISATION DE FONCTIONS DANS DES VEHICULES A MOTEUR

(30) Priorität: 14.02.1997 DE 19705738
(43) Veröffentlichungstag der Anmeldung: 01.12.1999
(73) Patentinhaber: TRW Automotive Electronics & Components GmbH & Co. KG, 78315 Radolfzell (DE)
(72) Erfinder: FEHRENBACH, Sebastian, D-78315 Radolfzell (DE)
(74) Vertreter: Eder, Thomas, Dr.-Ing.
(86) Internationale Anmeldenummer: DE9800419
(87) Internationale Veröffentlichungsnummer: WO9835851

(56) Entgegenhaltungen:
- EP-A- 0 449 285
- WO-A-96/13866
- DE-A- 4 243 175
- US-A- 4 908 743
- US-A- 4 959 761

## Beschreibung

Die Erfindung betrifft ein Leuchtelement, insbesondere zur Beleuchtung von Funktionssymbolen oder zur Signalisierung von Funktionen in Kraftfahrzeugen mit den Merkmalen des Oberbegriffs des Patentanspruchs 1.

Derartige Leuchtelemente sind meist so ausgebildet, dass diese direkt auf gedruckten Leiterplatten an einer geeigneten Position vorgesehen sind, so dass sie nach einer Montage der gedruckten Leiterplatte, beispielsweise hinter mit Durchlicht beleuchtbaren transparenten Funktionssymbolen in einem Armaturenbrett eines KFZ, bereits korrekt positioniert sind. Als lichterzeugendes Element finden in vielen Fällen Miniatur-Glühlampen Verwendung, die in einem geeigneten Gehäuse oder Sockel gehalten sind. In der gedruckten Leiterplatte ist dann an der für das Leuchtelement vorgesehenen Position eine Aussparung ausgebildet, in welche der Sockel eingesetzt und lösbar fixiert werden kann. Auf diese Weise ergibt sich der Vorteil einer einfachen Austauschbarkeit für das Leuchtelement.

Ein bekanntes Leuchtelement, hergestellt von der Fa. OSRAM, besteht aus einer Miniatur-Glühlampe, deren Anschlusskontakte mit jeweils einem durch Biegen nachbearbeiteten Stanzteil unlösbar verbunden sind, wobei das System, bestehend aus der Miniatur-Glühlampe und den beiden Stanzteilen, von oben in einen entsprechend ausgebildeten Kunststoffsockel eingesetzt wird. Der Sockel weist in seinem oberen Bereich einen im Wesentlichen zylindrischen Hals auf, an den sich eine Anlageschulter zur Montage des Gehäuses in einer Öffnung in einer gedruckten Leiterplatte anschließt. Jedes der beiden Kontaktelemente weist im Bereich oberhalb der Anlageschulter, d.h. im Bereich des Gehäusehalses zwei im Wesentlichen radial nach außen stehende Arme auf, welche jeweils die Oberseite bzw. die Unterseite der gedruckten Leiterplatte beaufschlagen. Die im Wesentlichen kreisförmige Ausnehmung in der gedruckten Leiterplatte weist zwei den Armen jedes Kontaktelements entsprechende Ausbuchtungen auf, in welche die Arme einsetzbar sind. Nach einem Verdrehen des Leuchtelements um seine Längsachse um einen vorbestimmten Winkel beaufschlagen die beiden Arme jedes Kontaktelements den Randbereich des Durchbruchs in der gedruckten Leiterplatte und fixieren auf diese Weise das Leuchtelement. Gleichzeitig dient zumindest einer der beiden Arme jedes Kontaktelements zur Kontaktierung einer Leiterbahn auf der Ober- oder Unterseite der gedruckten Leiterplatte, so dass das Leuchtelement mit Energie versorgt werden kann.

Dieses bekannte Leuchtelement ist zwar einfach austauschbar, jedoch ist die Herstellung des Leuchtelements relativ umständlich, da zunächst das System, bestehend aus Miniatur-Glühlampe und den Kontaktelementen, hergestellt werden muss und dann das gesamte System in entsprechend ausgerichteter Konfiguration in die Halteausnehmungen im Gehäusesockel eingesetzt werden muss. Da die Anschlusskontakte derartiger Miniatur-Glühlampen in der Regel aus einfachen relativ flexiblen dünnen Drähten bestehen, ist das Einsetzen eines derart instabilen Systems in den Gehäusesockel mit einem relativ großen Aufwand verbunden.

Es ist des Weiteren bekannt, als Leuchtelement eine übliche LED zu verwenden, wobei die LED in üblicher Weise, wie jedes andere elektronische Bauelement auch, mit seinen Anschlusskontakten in entsprechende Bohrungen auf der gedruckten Leiterplatte eingesetzt und mit dieser durch Löten fest verbunden wird. Hierbei wird zwar eine einfache Montage erreicht, jedoch ist eine einfache Austauschbarkeit des Leuchtelements nicht gegeben. Zwar weisen LED's in der Regel eine gegenüber einfachen Miniatur-Glühlampen sehr viel längere Lebensdauer auf, jedoch hat sich gezeigt, dass auch bei Verwendung von LED's ein Austauschen des Leuchtelements, also der LED, erforderlich werden kann.

In diesen Fällen muss dann meist die gesamte gedruckte Leiterplatte ausgebaut und die LED ausgelötet und ersetzt werden oder es wird infolge des damit verbundenen Arbeitsaufwands gar die gesamte gedruckte Leiterplatte mit sämtlichen Bauelementen ersetzt. Beides ist jedoch mit hohen Kosten verbunden.

Des weiteren besteht oftmals die Forderung einer Nachrüstbarkeit oder einfachen Ergänzung von LED's, um das KFZ mit bestimmten Funktionen nachzurüsten bzw. auszurüsten. Hierdurch kann die Typenvielfalt der erforderlichen Platinen in der Fertigung reduziert werden. Die gewünschten Funktionen können dann bei der Montage durch das Einsetzen der betreffenden LED's ausgewählt werden.

Auch das Dokument US-A-4, 908, 743 beschreibt ein gattungsgemäßes Leuchtelement.

Der Erfindung liegt daher, ausgehend von dem eingangs erläuterten Stand der Technik, die Aufgabe zugrunde, ein Leuchtelement, inbesondere zur Beleuchtung von Funktionssymbolen oder zur Signalisierung von Funktionen in Kraftfahrzeugen, zu schaffen, welches einfach montierbar bzw. austauschbar ist und gleichzeitig einen einfachen Aufbau aufweist, der eine einfache und kostengünstige Vormontage bzw. Herstellung des Leuchtelements gewährleistet.

Die Erfindung löst diese Aufgabe mit den Merkmalen des Patentanspruchs 1.

Durch das Vorsehen von vorzugsweise als Schneidklemmen ausgebildeten Längsschlitzen zur Aufnahme jeweils zumindest eines Anschlusskontakts eines lichterzeugenden Elements bzw. eines weiteren elektronischen Bauelements, ergibt sich der Vorteil einer einfachen Montage des Systems, bestehend aus dem zumindest einen lichterzeugenden Element und den zumindest zwei Kontaktelementen sowie ggf. weiteren elektrischen und/oder elektronischen Bauelementen im Gehäuse des Leuchtelements.

In einer bevorzugten Ausführungsform der Erfindung bilden die innenliegenden Enden der Längsschlitze unterschiedliche Lageebenen für die Anschlusskontakte, so dass nach einem Einsetzen eines Anschlusskontakts in einen Längsschlitz bis zum Anschlag das elektronische Bauelement bereits in seiner Lage fixiert ist. Durch die Ausbildung unterschiedlicher Lageebenen durch verschieden tiefe Längsschlitze wird erreicht, dass sich die Anschlusskontakte mehrerer lichterzeugender Elemente und/oder weiterer elektronischer Bauelemente bzw. die Elemente selbst nicht berühren und somit unerwünschte elektrische oder mechanische Kontakte vermieden werden. Des Weiteren kann ggf. die Lage der so vormontierten Bauelemente durch weitere Maßnahmen fixiert werden, beispielsweise durch das Verlöten der Anschlusskontakte mit den Kontaktelementen oder durch das Vergießen des gesamten Systems, bestehend aus den lichterzeugenden Elementen, ggf. den weiteren elektronischen Bauelementen, den Kontaktelementen und dem Gehäuse.

In der bevorzugten Ausführungsform der Erfindung weisen die zumindest zwei Kontaktelemente jeweils zumindest zwei im Wesentlichen parallele Anschlusskontaktfahnen auf, in welchen jeweils zumindest ein Längsschlitz zur Aufnahme von Anschlusskontakten vorgesehen ist. Hierdurch ergibt sich die Möglichkeit einer Montage von zwei oder mehreren Bauelementen (lichterzeugenden Elementen bzw. weiteren elektronischen Bauelementen) in jeweils getrennten Längsschlitzen.

Durch die unterschiedlich lange Ausbildung der zumindest zwei Kontaktfahnen eines Kontaktelements ist bei der manuellen Vormontage des Leuchtelements sofort eine eindeutige Identifizierung möglich, in welche Kontaktfahne bzw. in welchen Längsschlitz der Anschlusskontakt des gerade zu montierenden Bauelements einzusetzen ist. Insbesondere in Verbindung mit den vorstehend beschriebenen unterschiedlich tiefen Längsschlitzen zur Bildung unterschiedlicher Lageebenen für die Anschlusskontakte ergibt sich hierbei eine Vereinfachung der Montage.

Des Weiteren ergibt sich im Fall zweier oder mehrerer im Wesentlichen paralleler Kontaktfahnen eines Kontaktelements der Vorteil, dass der Bereich zwischen zwei benachbarten Kontaktfahnen rechtwinklig nach oben gebogen werden kann, so dass dieser nach oben gebogene, sich im Gehäuse des Leuchtelements radial nach außen erstreckende Arm als Halteelement für das Leuchtelement oder als äußerer Anschlusskontakt des Leuchtelements dienen kann. Ein derart ausgebildeter äußerer Anschlusskontakt bzw. ein so ausgebildetes Halteelement ist höchst einfach durch Stanzen und Biegen herstellbar.

Bei der bevorzugten Ausführungsform der Erfindung sind auch bei unterschiedlich tiefen Längsschlitzen bzw. unterschiedlich lang ausgebildeten Kontaktfahnen die Kontaktelemente eines Leuchtelements identisch ausgebildet. Hierdurch ergibt sich ebenfalls ein geringer Herstellungsaufwand.

Als lichterzeugendes Element können bei den Leuchtelementen nach der Erfindung herkömmliche lichterzeugende Elemente, wie beispielsweise handelsübliche Miniatur-Glühlampen, insbesondere aber auch handelsübliche LED's, verwendet werden, vorausgesetzt die Anschlusskontakte des lichterzeugenden Elements sind so formbar oder bereits so ausgebildet, dass diese in die Längsschlitze der Kontaktelemente eingeführt werden können.

Bei der bevorzugten Ausführungsform der Erfindung ist das lichterzeugende Element in Form zweier LED's realisiert, wobei die Anschlusskontakte der beiden LED's in jeweils denselben Längsschlitzen der Anschlusskontakte aufgenommen sind. Der häufig erforderliche Parallelwiderstand zu den beiden parallel geschalteten LED's, die einen integrierten Vorwiderstand aufweisen können, (selbstverständlich ist bedarfsweise auch eine Anti-Parallelschaltung der LED's möglich) wird mit seinen Anschlusskontakten in jeweils zwei weitere Längsschlitze der Anschlusskontakte eingesetzt und darin gehalten. Durch die vorzugsweise unterschiedlich tief ausgebildeten Längsschlitze ist die eindeutige Position der beiden LED's bzw. des Parallelwiderstands gewährleistet.

Bei der bevorzugten Ausführungsform der Erfindung sind die Kontaktelemente so im Gehäuse gehalten, dass die unteren Bereiche der Kontaktelemente mit den Längsschlitzen für das Montieren des zumindest einen lichterzeugenden Elements oder des weiteren elektronischen Bauelements zugänglich sind. Auf diese Weise ergibt sich der Vorteil einer einfachen Montage der Komponenten des Leuchtelements, da zunächst die Kontaktelemente in das Gehäuse eingebracht oder einstückig mit diesen hergestellt (beispielsweise durch Umspritzen) werden können und erst anschließend die lichterzeugenden Elemente bzw. die weiteren elektronischen Bauelemente, vorzugsweise einzeln, in die Längsschlitze einsetzbar sind. Es muss daher kein instabiles System, bestehend aus mehreren Bauelementen, zunächst in seiner Lage fixiert und anschließend auf einmal in das Gehäuse eingesetzt werden.

Bei der bevorzugten Ausführungsform sind die Kontaktelemente von der Oberseite des Gehäuses her in dieses einschiebbar. Hierdurch ergibt sich der Vorteil, dass nach der Montage der weiteren Elemente von der Unterseite des Gehäuses her das gesamte System im Gehäuse (in beiden axialen Richtungen, d.h. nach oben und unten) fixiert ist.

Werden LED's als lichterzeugende Elemente verwendet, so sind am Gehäuse des erfindungsgemäßen Leuchtelements ein oder mehrere Kodierungsvorsprünge vorgesehen, welche in Verbindung mit einer entsprechend kodierten Montageöffnung im Montageteil eine eindeutige Montagestellung beim Einsetzen des Leuchtelements sicherstellen. Eine Verpolung der LED's ist somit nicht möglich.

Weitere Ausführungsformen der Erfindung ergeben sich aus den Unteransprüchen.

Die Erfindung wird nachfolgend anhand eines in der Zeichnung dargestellten Ausführungsbeispiels näher erläutert. In der Zeichnung zeigen:
- Fig. 1: eine perspektivische Ansicht eines Leuchtelements nach der Erfindung mit zwei LED's als lichterzeugende Elemente;
- Fig. 2: eine Explosionsdarstellung der einzelnen Komponenten des Leuchtelements gemäß Fig. 1;
- Fig. 3: eine perspektivische Darstellung der elektrisch wirksamen Komponenten des Leuchtelements gemäß Fig. 1 in montierter Position;
- Fig. 4: eine Ansicht von unten auf das Leuchtelement in Fig. 1;
- Fig. 5a: eine perspektivische Draufsicht eines in einer Montageöffnung eines Montageteils eingesetzten Leuchtelements gemäß Fig. 1 und
- Fig. 5b: eine Ansicht gemäß Fig. 5a bei um seine Längsachse zur Fixierung und Kontaktierung gedrehtem Leuchtelement.

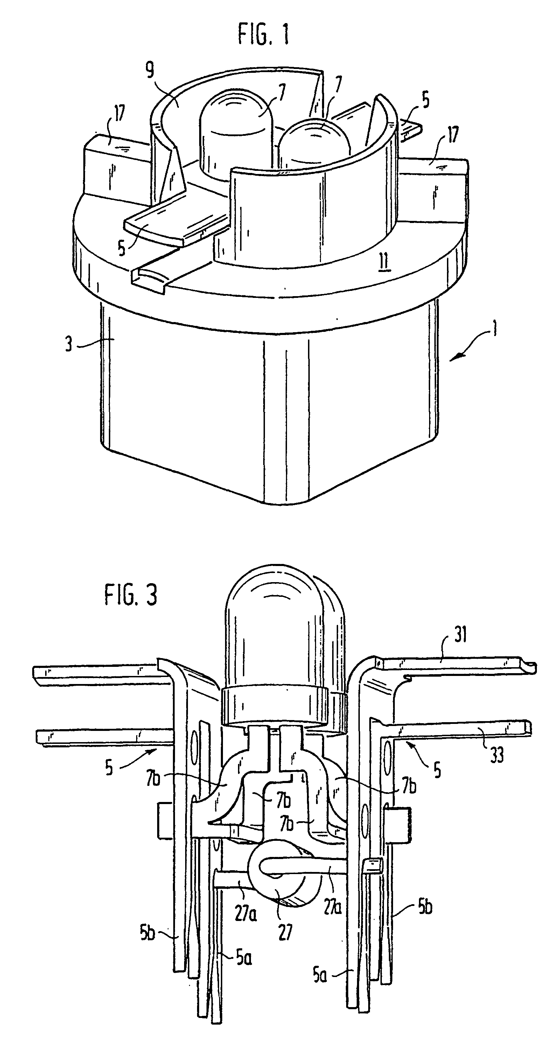

Das in Fig. 1 perspektivisch dargestellte Leuchtelement 1 nach der Erfindung besteht aus einem Gehäuse 3, das beispielsweise als Kunststoffspritzteil ausgebildet sein kann, sowie zwei darin von oben her einsetzbaren Kontaktelementen 5 und lichterzeugenden Elementen 7 in Form zweier Leuchtdioden (LED).

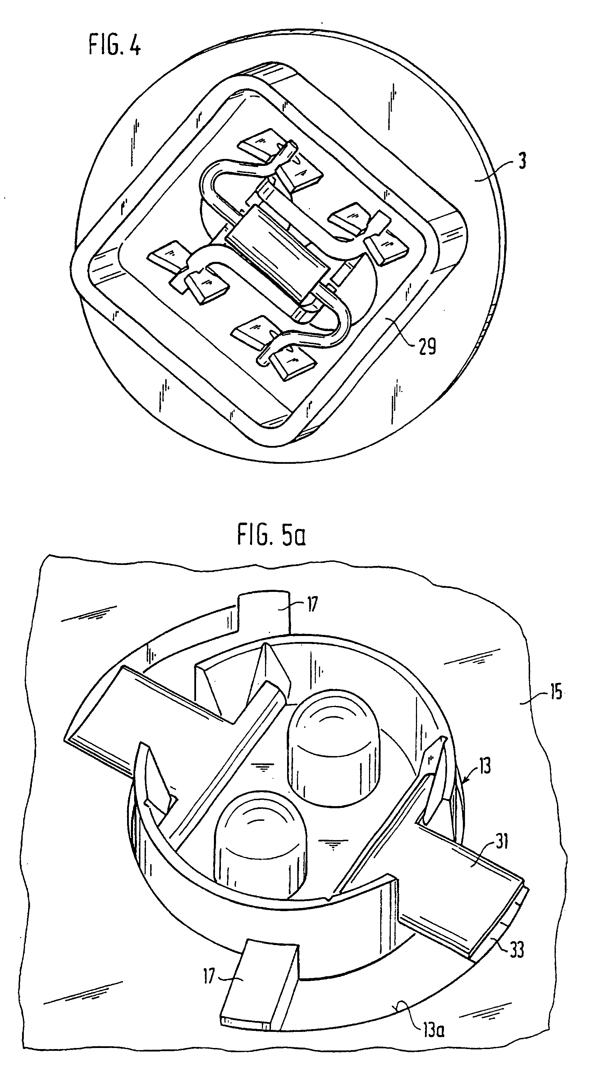

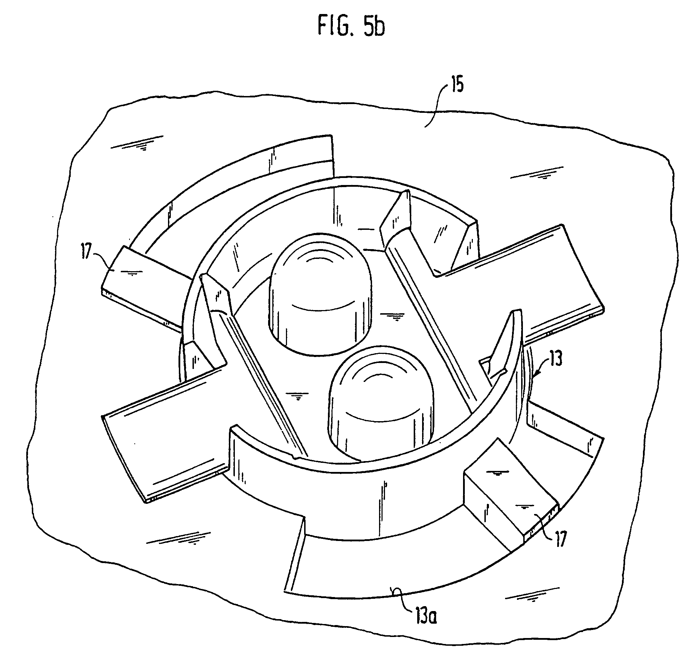

Das Gehäuse weist einen im Wesentlichen zylindrischen Hals 9 auf, an welchen sich eine Anlageschulter 11 anschließt. Die Anlageschulter 11 und der Hals 9 dienen zur Montage des Gehäuses 3 in einer Montageöffnung 13 eines Montageteils 15, beispielsweise einem Durchbruch in einer gedruckten Leiterplatte (Fig. 5).

Auf der Anlageschulter 11 sind zwei sich nach oben erstrekkende Kodierungsvorsprünge 17 vorgesehen, die, wie nachstehend anhand der Fig. 5a und 5b erläutert, das verpolungssichere Montieren des Leuchtelements gewährleisten.

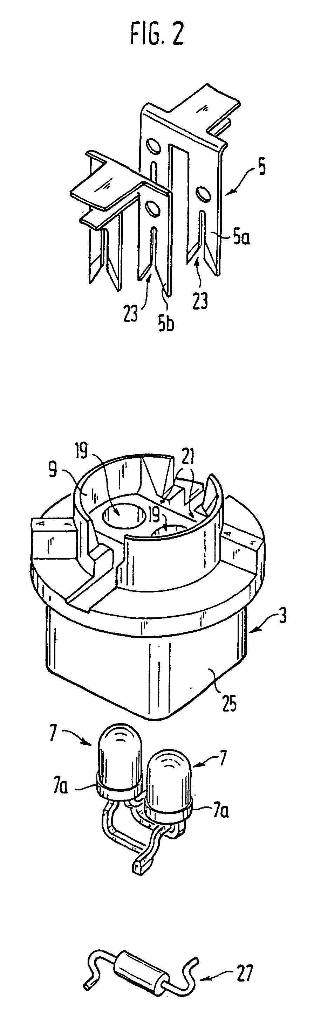

Wie aus Fig. 2 ersichtlich, weist das Gehäuse 3 zwei sich parallel zur Längsachse des Gehäuses erstreckende Durchbrüche 19 auf, in welche die beiden LED's 7, vorzugsweise von der Unterseite des Gehäuses 3 her, einsetzbar sind.

Die LED's können, wie aus Fig. 2 ersichtlich, so ausgebildet sein, dass diese einen unteren verdickten zylindrischen Bereich 7a aufweisen, welcher in Verbindung mit einer entsprechend komplementären Ausbildung der Durchbrüche 19 eine Fixierung der LED's gegen ein Durchrutschen nach oben durch das Gehäuse 3 verhindern und zudem eine eindeutige Positionierung der LED's in der Längsachse des Gehäuses 3 ermöglichen.

Das Gehäuse 3 weist des Weiteren jeweils zwei im Wesentlichen parallel zur Längsachse verlaufende Durchbrüche 21 zur Aufnahme jeweils eines der Kontaktelemente 5 bzw. der Kontaktfahnen 5a, 5b auf.

Die Kontaktelemente 5 sind so ausgebildet, dass die beiden sich im Wesentlichen in Längsachse des Gehäuses 3 in den Durchbrüchen 21 erstreckenden Kontaktfahnen 5a, 5b eine unterschiedliche Länge besitzen, wobei die Kontaktfahnen 5a eine größere Länge aufweisen als die Kontaktfahnen 5b. Jede der Kontaktfahnen 5a, 5b weist einen Längsschlitz 23 auf, in welchen ein oder mehrere Anschlusskontakte der LED's bzw. weiterer Bauelemente einsetzbar sind. Der Längsschlitz 23 der jeweils längeren Kontaktfahne 5a ist dabei weniger tief ausgebildet als der Längsschlitz 23 der Kontaktfahne 5b. Jeder Längsschlitz 23 kann als Schneidklemme ausgebildet sein.

Der untere Bereich 25 des Gehäuses 3 kann, wie in Fig. 2 dargestellt, beispielsweise rechteckigen bzw. quadratischen Querschnitt aufweisen, so dass das Gehäuse 3 durch das Ansetzen eines entsprechenden Werkzeugs, beispielsweise eines Gabelschlüssels, in seiner Längsachse zur Montage des Leuchtelements 1 in einer Montageöffnung 13 gedreht werden kann.

Fig. 3 zeigt die elektrisch wirksamen Komponenten des Leuchtelements 1 gemäß den Fig. 1 und 2 in montierter Position, wobei jedoch zu deren Verdeutlichung auf die Darstellung des Gehäuses 3 verzichtet wurde. Wie aus Fig. 3 ersichtlich, sind die beiden LED's 7 mit ihren Anschlusskontakten 7b untereinander verbunden, wobei die Anschlusskontakte 7b so geformt sind, dass die beiden LED's 7 nebeneinander im gewünschten Abstand (vorgegeben durch die Durchbrüche 19) und auf gleicher Höhe positioniert sind. Das Verbinden der Anschlusskontakte 7b der LED's 7 kann beispielsweise durch Löten, Kaltverformen (Pressvorgang) oder dergleichen erfolgen. Auf diese Weise ergibt sich der Vorteil, dass nach dem Einsetzen der Kontaktelemente 5 in das Gehäuse 3 die beiden LED's 7 in einem Bestückungsvorgang in die Längsschlitze 23 der Kontaktfahnen 5a, 5b eingesetzt werden können. Die Längsschlitze 23 sind dabei, wie bereits erwähnt, vorzugsweise als Schneidklemmen ausgebildet, so dass durch das einfache Einschieben der Anschlusskontakte 7b in die Längsschlitze 23 kein weiterer Montagevorgang für das Kontaktieren der Anschlusskontakte 7b durch die Kontaktelemente 5 erforderlich ist. Die beiden LED's 7 können selbstverständlich auch ohne ein vorheriges Verbinden der jeweiligen Anschlusskontakte 7b in die betreffenden Längsschlitze 23 eingesetzt werden.

Wie aus Fig. 3 ersichtlich, erfolgt das Einsetzen der Anschlusskontakte 7b der LED's 7 in die jeweils tiefer ausgebildeten Längsschlitze 23 der kürzeren Kontaktfahnen 5b. Auf diese Weise ergibt sich der Vorteil, dass in die Längsschlitze 23 der länger ausgebildeten Kontaktfahnen 5a die Anschlusskontakte 27a eines Parallelwiderstands 27 eingesetzt werden können. Die Anschlusskontakte 27a des Parallelwiderstands 27 müssen hierzu lediglich in einer Ebene durch Biegen in eine Form gebracht werden, so dass die Enden der Anschlusskontakte 27a des Parallelwiderstands 27 in die betreffenden Längsschlitze 23 der längeren Kontaktfahnen 5a eingesetzt werden können.

Da die als Klemmschneiden ausgebildeten Längsschlitze 23 der längeren Kontaktfahnen 5a weniger tief ausgebildet sind, ergibt sich für den Parallelwiderstand 27 nach dem Einsetzen der Anschlusskontakte 27a in die Längsschlitze 23 bis zum Anschlag eine Position des Parallelwiderstands 27 unterhalb der Anschlusskontakte 7b der LED's 7 bzw. der LED's als solche.

Nach dem Einsetzen der LED's bzw. des Parallelwiderstand können die betreffenden Anschlusskontakte 7b bzw. 27a selbstverständlich auch durch Löten, Verschweißen oder dergl. mit den Kontaktfahnen verbunden werden. Ggf. kann dann auch auf die Ausbildung der Kontaktfahnen als Schneidklemmen verzichtet werden.

In Fig. 4 ist die Lage der elektrisch wirksamen Bauelemente in einer perspektivischen Ansicht von unten auf das Leuchtelement 1 gemäß Fig. 1 dargestellt. Diese Ansicht verdeutlicht, dass das Gehäuse 3 an seiner Unterseite einen sich nach unten erstreckenden Vorsprung 29 aufweisen kann, der die über die Unterseite des Gehäuses 3 hinausragenden elektrisch wirksamen Komponenten des Leuchtelements 1 als Wandung umschließt.

Der vom Vorsprung 29 eingeschlossene Raum kann nach der Montage der elektrisch wirksamen Komponenten des Leuchtelements 1 beispielsweise mit einem Kunstharz vergossen werden, um die Position der einzelnen Komponenten zusätzlich zu fixieren bzw. um die Komponenten gegen Umwelteinflüsse zu schützen.

Das Schützen der Komponenten kann jedoch beispielsweise dadurch erfolgen, dass auf den Vorsprung 29 von unten ein passender Deckel (nicht dargestellt) aufgesetzt wird. Der Deckel kann in den Innenraum innerhalb des Vorsprungs 29 ragende Vorsprünge aufweisen, welche den Widerstand 27 bzw. die LED's 7 oder deren Anschlusskontakte beaufschlagen und so zusätzlich fixieren. Der Deckel kann seinerseits durch Verpressen, Verkleben oder Verschweißen mit dem Vorsprung 29 bzw. der Unterseite des Gehäuses 3 fixiert werden.

Die Fig. 5a und 5b zeigen die Montage des Leuchtelements nach der Erfindung in einer Montageöffnung 13 eines Montageelements 15, beispielsweise einem Durchbruch in einer gedruckten Leiterplatte.

Die Montageöffnung 13 ist entsprechend dem Außendurchmesser des Halses 9 des Gehäuses 3 im Wesentlichen zylindrisch ausgebildet und weist Kodierungsausnehmungen 13a auf, in welche die Kodierungsvorsprünge 17 des Gehäuses 3 eingreifen. Die Kodierungsausnehmungen 13a sind dabei so ausgebildet, dass diese ein Verdrehen des Leuchtelements 1 in der Montageöffnung 13 um einen vorbestimmten Winkel zulassen.

Die Kodierungsausnehmungen 13a ermöglichen in Verbindung mit den Kodierungsvorsprüngen 17 bzw. ggf. in Verbindung mit den sich radial nach außen erstreckenden Armen 31, 33 der Kontaktelemente 5 für das Einsetzen des Gehäuses in die Montageöffnung 13 nur in einer eindeutig definierten Position.

Der obere sich radial nach außen erstreckende Arm 31 jedes der beiden Kontaktelemente 5 kann durch einfaches Umbiegen eines entsprechenden oberen Bereichs eines Stanzteils zur Herstellung eines Kontaktelements 5 hergestellt werden. Der untere Arm 33 des Kontaktelements 5 kann dagegen in einfacher Weise durch ein Nachobenbiegen eines zwischen den beiden Kontaktfahnen 5a, 5b befindlichen Bereichs eines entsprechenden Stanzteils erzeugt werden. Die einander zugewandten Oberflächen der sich radial nach außen erstreckenden, im Wesentlichen parallel verlaufenden Arme 31, 33 weisen vorzugsweise einen Abstand auf, der geringfügig kleiner ist als die Dicke eines entsprechenden Randbereichs des Montageteils in der Umgebung der Montageöffnung 13, um eine sichere Kontaktierung und Halterung des Leuchtelements zu gewährleisten.

Nach dem Einsetzen des Leuchtelements 1 von der Rückseite her in die Montageöffnung 13 des Montageteils 15 (Position gemäß Fig. 5a) kann dieses somit durch ein Verdrehen um seine Längsachse in der Montageöffnung fixiert werden. Der hierfür erforderliche vorbestimmte Winkel ist durch die Kodierungsausnehmungen 13a vorgegeben. Wie aus Fig. 5b ersichtlich, wird das Leuchtelement 1 zur Fixierung einfach so weit um seine Längsachse gedreht, bis einer der Kodierungsvorsprünge 17 an der als Anschlag wirkenden Begrenzungswandung der betreffenden Kodierungsausnehmung 13a anliegt. Diese Montage-Endposition ist in Fig. 5b dargestellt.

In dieser Montage-Endposition beaufschlagen die einander zugewandten Seiten der sich radial erstreckenden Arme 31, 33 die Oberseite bzw. Unterseite des Montageteils 15 und fixieren auf diese Weise das Leuchtelement in der Montageöffnung 13. Gleichzeitig kann auf der Oberseite und/oder Unterseite des Montageelements 15 jeweils ein Kontakt zur Energieversorgung des Leuchtelements 1 vorgesehen sein (nicht dargestellt). Dieser kann beispielsweise als gedruckte Leiterbahn ausgebildet sein. Die Position der gedruckten Leiterbahn bzw. des montageteilseitigen Anschlusskontakts muss selbstverständlich so gewählt sein, dass dieser jeweils von zumindest einem der beiden Arme 31, 33 in der Montage-Endposition kontaktiert wird.

Das Leuchelement nach der Erfindung kann auch mit einer im Gehäuse 3 vorgesehenen Platine, z.B. bestückt mit SMD-Bauteilen, ausgerüstet sein. Die Anschlusskontakte der Platine können ebenfalls in die Kontaktfahnen 5a, 5b einsetzbar oder auf andere Weise elektrisch mit den Kontaktelementen 5 verbunden sein.

## Patentansprüche

1. Leuchtelement, insbesondere zur Beleuchtung von Funktionssymbolen oder zur Signalisierung von Funktionen in Kraftfahrzeugen,
a) mit einem Gehäuse (3) zur Montage des Leuchtelements (1) in einem Montageteil (15),
b) in welchem zumindest ein lichterzeugendes Element (7) aufgenommen ist, und
c) mit zumindest zwei im Gehäuse (3) aufgenommenen Kontaktelementen (5) zur Kontaktierung der Anschlusskontakte des zumindest einen lichterzeugenden Elements (7),
**dadurch gekennzeichnet**,
d) dass jedes Kontaktelement (5) Längsschlitze (23) vorbestimmter Tiefe zur Aufnahme jeweils zumindest eines Anschlusskontakts (7b) des zumindest einen lichterzeugenden Elements (7) oder eines Anschlusskontakts (27a) eines weiteren elektrischen und/oder elektronischen Bauelements (27) aufweist und
e) dass die innen liegenden Enden der Längsschlitze (23) Lageebenen für die Anschlusskontakte (7b; 27a) bilden.

2. Leuchtelement nach Anspruch 1, **dadurch gekennzeichnet, dass** die Längsschlitze (23) als Schneidklemmen ausgebildet sind und gleichzeitig zur Lagefixierung und elektrischen Kontaktierung des betreffenden zumindest einen Anschlusskontakts (7b; 27a) dienen.

3. Leuchtelement nach Anspruch 1 oder 2, **dadurch gekennzeichnet, dass** die Längsschlitze (23) für die lichterzeugenden Elemente (7) oder das weitere elektronische Bauelement (27) jeweils unterschiedlich tief ausgebildet sind und unterschiedliche Lageebenen definieren.

4. Leuchtelement nach einem der vorhergehenden Ansprüche, **dadurch gekennzeichnet, dass** die zumindest zwei Kontaktelemente (5) jeweils zumindest zwei im Wesentlichen parallele Anschlusskontaktfahnen (5a, 5b) aufweisen, in welchen jeweils zumindest ein Längsschlitz (23) vorgesehen ist.

5. Leuchtelement nach Anspruch 4, **dadurch gekennzeichnet, dass** die zumindest zwei Kontaktfahnen (5a, 5b) eines Kontaktelements (5) unterschiedlich lang ausgebildet sind.

6. Leuchtelement nach Anspruch 4 oder 5, **dadurch gekennzeichnet, dass** ein zwischen zwei Kontaktfahnen (5a, 5b) befindlicher Bereich des zumindest einen Kontaktelements (5) im Wesentlichen rechtwinklig zu den Kontaktfahnen abgewinkelt ist und einen äußeren Anschlusskontakt des Leuchtelements (1) und/oder ein Halteelement für das Leuchtelement bildet.

7. Leuchtelement nach Anspruch 6, **dadurch gekennzeichnet, dass** ein oberer Bereich (31) der zumindest zwei Kontaktelemente (5) im Wesentlichen rechtwinklig zu den Kontaktfahnen (5a, 5b) und im Wesentlichen parallel zu dem äußeren Anschlusskontakt oder Montageelement (33) verläuft.

8. Leuchtelement nach einem der vorhergehenden Ansprüche, **dadurch gekennzeichnet, dass** die zumindest zwei Kontaktelemente (5) identisch ausgebildet sind.

9. Leuchtelement nach einem der vorhergehenden Ansprüche, **dadurch gekennzeichnet, dass** das zumindest eine lichterzeugende Element (7) als Leuchtdiode ausgebildet ist

10. Leuchtelement nach Anspruch 9, **dadurch gekennzeichnet, dass** als weiteres elektronisches Bauelement ein elektrischer Widerstand (27) durch die Aufnahme dessen Anschlusskontakte (27a) in jeweils zwei weiteren Längsschlitzen (23) parallel zu der Leuchtdiode (7) geschaltet ist.

11. Leuchtelement nach Anspruch 9 oder 10, **dadurch gekennzeichnet, dass** zwei Leuchtdioden (7) mit geeignet geformten Anschlusskontakten (7b) in jeweils denselben Längsschlitzen (23) aufgenommen sind.

12. Leuchtelement nach einem der vorhergehenden Ansprüche, **dadurch gekennzeichnet, dass** die Kontaktelemente (5) so im Gehäuse (3) gehalten sind, dass die unteren Bereiche der Kontaktelemente mit den Längsschlitzen (23) für das Montieren des zumindest einen lichterzeugenden Elements (7) oder des weiteren elektronischen Bauelements (27) zugänglich sind.

13. Leuchtelement nach Anspruch 12, **dadurch gekennzeichnet, dass** die Kontaktelemente (5) von der Oberseite des Gehäuses (3) her in dieses einschiebbar sind.

14. Leuchtelement nach Anspruch 12, **dadurch gekennzeichnet, dass** das zumindest eine lichterzeugende Element (7) von der Gehauseunterseite her in einen im Gehäuse (3) vorgesehenen Durchbruch (19) einsetzbar ist, so dass eine Lichtabstrahlung an der Gehäuseoberseite erfolgt.

15. Leuchtelement nach einem der vorhergehenden Ansprüche, **dadurch gekennzeichnet, dass** das Gehäuse (3) in seinem oberen Bereich eine Anlageschulter (11) zur Montage in einer Montageöffnung (13) des Montageteils (15) aufweist.

16. Leuchtelement nach Anspruch 15, **dadurch gekennzeichnet, dass** das Gehäuse (3) einen oder mehrere Kodierungsvorsprünge (17) zur Erzeugung einer eindeutigen Montagestellung beim Einsetzen in eine entsprechend kodierte Montageöffnung (13, 13a) des Montageteils (15) aufweist.

## Claims

1. Luminous element, in particular for illuminating function symbols or for signalling functions in motor vehicles,
a) having a housing (3) for mounting the luminous element (1) in a mounting part (15),
b) in which at least one light-generating element (7) is accommodated, and
c) having at least two contact elements (5) accommodated in the housing (3), for making contact with the connection contacts of the at least one light-generating element (7),
**characterized**
d) in that each contact element (5) has longitudinal slots (23) of predetermined depth for accommodating in each case at least one connection contact (7b) of the at least one light-generating element (7) or a connection contact (27a) of a further electrical and/or electronic component (27), and
e) in that the inner ends of the longitudinal slots (23) form positional planes for the connection contacts (7b; 27a).

2. Luminous element according to Claim 1, **characterized in that** the longitudinal slots (23) are designed as insulation-piercing terminals and simultaneously serve for the positional fixing and electrical contact-connection of the relevant at least one connection contact (7b; 27a).

3. Luminous element according to Claim 1 or 2, **characterized in that** the longitudinal slots (23) for the light-generating elements (7) for the further electronic component (27) are in each case designed to be of different depth and define different positional planes.

4. Luminous element according to one of the preceding claims, **characterized in that** the at least two contact elements (5) each have at least two essentially parallel connection contact lugs (5a, 5b), in each of which at least one longitudinal slot (23) is provided.

5. Luminous element according to Claim 4, **characterized in that** the at least two contact lugs (5a, 5b) of a contact element (5) are designed to be of different lengths.

6. Luminous element according to Claim 4 or 5, **characterized in that** a region of the at least one contact element (5), which region is situated between two contact lugs (5a, 5b), is angled away essentially at right angles to the contact lugs and forms an external connection contact of the luminous element (1) and/or a holding element for the luminous element.

7. Luminous element according to Claim 6, **characterized in that** an upper region (31) of the at least two contact elements (5) runs essentially at right angles to the contact lugs (5a, 5b) and essentially parallel to the external connection contact or mounting element (33).

8. Luminous element according to one of the preceding claims, **characterized in that** the at least two contact elements (5) are of identical design.

9. Luminous element according to one of the preceding claims, **characterized in that** the at least one light-generating element (7) is designed as a light-emitting diode.

10. Luminous element according to Claim 9, **characterized in that**, as a further electronic component, an electrical resistor (27) is connected in parallel with the light-emitting diode (7) by the connection contacts (27a) of the said resistor being accommodated in each case in two further longitudinal slots (23).

11. Luminous element according to Claim 9 or 10, **characterized in that** two light-emitting diodes (7) with suitably formed connection contacts (7b) are accommodated in the same longitudinal slots (23) in each case.

12. Luminous element according to one of the preceding claims, **characterized in that** the contact elements (5) are held in the housing (3) in such a way that the lower regions of the contact elements with the longitudinal slots (23) are accessible for the mounting of the at least one light-generating element (7) or of the further electronic component (27).

13. Luminous element according to Claim 12, **characterized in that** the contact elements (5) can be pushed into the housing (3) from the top side thereof.

14. Luminous element according to Claim 12, **characterized in that** the at least one light-generating element (7) can be inserted from the underside of the housing into a perforation (19) provided in the housing (3), with the result that light is radiated at the top side of the housing.

15. Luminous element according to one of the preceding claims, **characterized in that** the housing (3) has, in its upper region, a bearing shoulder (11) for mounting in a mounting opening (13) of the mounting part (15).

16. Luminous element according to Claim 15, **characterized in that** the housing (3) has one or more coding projections (17) for producing an unambiguous mounting position upon insertion into a correspondingly coded mounting opening (13, 13a) of the mounting part (15).

## Revendications

1. Elément lumineux, notamment pour l'éclairage de symboles de fonction ou pour la signalisation de fonctions dans des véhicules automobiles,
a) muni d'un boîtier (3) en vue du montage de l'élément lumineux (1) dans une partie de montage (15),
b) dans lequel est logé au moins un élément (7) générateur de lumière, et
c) d'au moins deux éléments de contact (5) logés dans ledit boîtier (3), en vue de la connexion des contacts de raccordement de l'élément (7) générateur de lumière prévu au minimum,
**caractérisé par** le fait
d) que chaque élément de contact (5) comporte des fentes longitudinales (23) de profondeur prédéterminée, pour recevoir respectivement au moins un contact de raccordement (7b) de l'élément (7) générateur de lumière prévu au minimum, ou un contact de raccordement (27a) d'un autre composant (27) électrique et/ou électronique ; et
e) que les extrémités des fentes longitudinales (23), occupant des positions intérieures, forment des plans de positionnement pour les contacts de raccordement (7b ; 27a).

2. Elément lumineux selon la revendication 1, **caractérisé par le fait que** les fentes longitudinales (23) sont réalisées sous la forme de bornes poinçonnées et servent, simultanément, à la consignation à demeure et à la connexion électrique du contact de raccordement (7b ; 27a) considéré, prévu au minimum.

3. Elément lumineux selon la revendication 1 ou 2, **caractérisé par le fait que** les fentes longitudinales (23), destinées aux éléments (7) générateurs de lumière ou au composant électronique supplémentaire (27), sont respectivement réalisées avec profondeur différente et définissent des plans de positionnement différents.

4. Elément lumineux selon l'une des revendications précédentes, **caractérisé par le fait que** les deux éléments de contact (5) prévus au minimum présentent, à chaque fois, au moins deux lamelles de contact (5a, 5b) pour l'essentiel parallèles, dans lesquelles une fente longitudinale (23) est respectivement prévue.

5. Elément lumineux selon la revendication 4, **caractérisé par le fait que** les deux lamelles de contact (5a, 5b) d'un élément de contact (5), prévues au minimum, sont réalisées de longueur différente.

6. Elément lumineux selon la revendication 4 ou 5, **caractérisé par le fait qu'**une région de l'élément de contact (5) prévu au minimum, située entre deux lamelles de contact (5a, 5b), est coudée pour l'essentiel à angle droit vis-à-vis desdites lamelles de contact, et forme un contact extérieur de raccordement de l'élément lumineux (1) et/ou un élément de retenue affecté audit élément lumineux.

7. Elément lumineux selon la revendication 6, **caractérisé par le fait qu'**une région supérieure (31) des deux éléments de contact (5) prévus au minimum s'étend, pour l'essentiel, à angle droit vis-à-vis des lamelles de contact (5a, 5b) et, pour l'essentiel, parallèlement au contact extérieur de raccordement ou à l'élément de montage (33).

8. Elément lumineux selon l'une des revendications précédentes, **caractérisé par le fait que** les deux éléments de contact (5), prévus au minimum, sont de réalisations identiques.

9. Elément lumineux selon l'une des revendications précédentes, **caractérisé par le fait que** l'élément (7) générateur de lumière, prévu au minimum, est réalisé sous la forme d'une diode électroluminescente.

10. Elément lumineux selon la revendication 9, **caractérisé par le fait qu'**une résistance électrique (27), matérialisant le composant électronique supplémentaire, est branchée en parallèle avec la diode électroluminescente (7), par réception de ses contacts de raccordement (27a) dans deux fentes longitudinales supplémentaires respectives (23).

11. Elément lumineux selon la revendication 9 ou 10, **caractérisé par le fait que** deux diodes électroluminescentes (7), dotées de contacts de raccordement (7b) de configuration appropriée, sont respectivement logées dans les mêmes fentes longitudinales (23).

12. Elément lumineux selon l'une des revendications précédentes, **caractérisé par le fait que** les éléments de contact (5) sont retenus dans le boîtier (3) de façon telle que les régions inférieures desdits éléments de contact soient accessibles, avec les fentes longitudinales (23), pour le montage de l'élément (7) générateur de lumière prévu au minimum, ou du composant électronique supplémentaire (27).

13. Elément lumineux selon la revendication 12, **caractérisé par le fait que** les éléments de contact (5) peuvent être glissés dans le boîtier (3) à partir de la face supérieure de ce dernier.

14. Elément lumineux selon la revendication 12, **caractérisé par le fait que** l'élément (7) générateur de lumière, prévu au minimum, peut être inséré dans une perforation (19) prévue dans le boîtier (3), à partir de la face inférieure dudit boîtier, ce qui procure une diffusion de lumière à la face supérieure dudit boîtier.

15. Elément lumineux selon l'une des revendications précédentes, **caractérisé par le fait que** le boîtier (3) présente, dans sa région supérieure, un épaulement d'appui (11) en vue du montage dans un orifice de montage (13) de la partie de montage (15).

16. Elément lumineux selon la revendication 15, **caractérisé par le fait que** le boîtier (3) comporte une ou plusieurs protubérance(s) de codage (17), en vue d'établir une position de montage univoque au cours de l'insertion dans un orifice de montage (13, 13a) de la partie de montage (15), pourvu d'un codage correspondant.
